# EUROPEAN PATENT APPLICATION

(11) **EP 4 844 575 A1**
(43) Date of publication of application: **25.11.2026**
(21) Application number: 24925510.0
(22) Date of filing: 27.09.2024
(51) Int. Cl.: G06F 9/4401

(54) **DEVICE STARTING METHOD AND APPARATUS, AND DEVICE, STORAGE MEDIUM AND COMPUTER PROGRAM PRODUCT**

(30) Priority: 22.02.2024 CN 202410201478
(71) Applicant: Huawei Technologies Co., Ltd., Shenzhen, Guangdong 518129 (CN)
(72) Inventor: LI, Peicong, Shenzhen, Guangdong 518129 (CN); SONG, Dongkuang, Shenzhen, Guangdong 518129 (CN); MA, Xiaorui, Shenzhen, Guangdong 518129 (CN)
(74) Representative: Huawei European IPR
(86) International application number: PCT/CN2024/121670
(87) International publication number: WO 2025/175771

(57) **Abstract**

This application discloses a device booting method and apparatus, a device, a storage medium, and a computer program, and pertains to the field of computer technologies. The method includes: after a computer device is powered on, running a basic input/output system BIOS; performing device enumeration by using the BIOS, to determine a hardware device connected to the computer device, where the hardware device includes a device that can run a device driver to implement self-booting; each time a hardware device is discovered through enumeration, obtaining a booting state of the hardware device; and when obtaining booting states of all hardware devices connected to the computer device and at least one of the hardware devices is in a normal operating state, running an operating system of the computer device. In other words, provided that at least one of the hardware devices connected to the computer device is able to implement self-booting, duration for booting the operating system by the BIOS can be reduced according to this application.

## Description

This application claims priority to Chinese Patent Application No. 202410201478.4, filed on February 22, 2024 and entitled "DEVICE BOOTING METHOD AND APPARATUS, DEVICE, STORAGE MEDIUM, AND COMPUTER PROGRAM PRODUCT", which is incorporated herein by reference in its entirety.

### TECHNICAL FIELD

This application relates to the field of computer technologies, and in particular, to a device booting method and apparatus, a device, a storage medium, and a computer program product.

### BACKGROUND

Computer devices generally need to have a variety of capabilities such as storage capabilities, communication capabilities, and display capabilities. These capabilities are usually provided by hardware devices such as storage devices, network devices, and display devices that are connected to the computer devices. As the complexity of operating systems increases, types of hardware devices connected to the computer device are increasingly diversified, and more hardware devices access the operating system. For the hardware device, it must access the operating system and complete functional initialization before exposing corresponding functions to the outside.

In related technologies, a computer device generally adopts a hardware device and device driver model to serially boot a plurality of hardware devices. Device drivers of the plurality of hardware devices are stored in local firmware of the computer device, that is, a basic input/output system (basic input/output system, BIOS). Specifically, after the computer device is powered on, a processor first runs the BIOS, and scans a bus by using the BIOS, to discover, through enumeration, a plurality of hardware devices connected to the computer device. In the device enumeration process, each time a hardware device is discovered through enumeration, the BIOS runs a device driver of the hardware device, to initialize the hardware device, and allocates corresponding system resources to the hardware device in the computer device, to ensure that the hardware device can operate normally. By parity of reasoning, after the BIOS serially loads and runs device drivers of all the hardware devices, the BIOS loads a bootloader of the operating system to boot the operating system.

However, in the foregoing device booting method, as a quantity of hardware devices connected to the computer device increases, the booting time of the operating system also increases linearly, which severely affects system booting performance of the computer device.

### SUMMARY

This application provides a device booting method and apparatus, a device, a storage medium, and a computer program product, to reduce booting time of an operating system of a computer device. The technical solutions are as follows:
According to a first aspect, a device booting method is provided, and the method includes:
after a computer device is powered on, running a basic input/output system BIOS; performing device enumeration by using the BIOS, to determine a hardware device connected to the computer device, where the hardware device includes a device that can run a device driver to implement self-booting; each time a hardware device is discovered through enumeration, obtaining a booting state of the hardware device; and when obtaining booting states of all hardware devices connected to the computer device and at least one of the hardware devices is in a normal operating state, running an operating system of the computer device.

It can be learned that, after the computer device is powered on, the BIOS is run, and the BIOS performs device enumeration to determine the hardware device connected to the computer device. When the hardware device is able to implement self-booting, the computer device does not need to store and run the device driver of the hardware device, and may directly obtain the booting state of the hardware device. Therefore, provided that at least one of the hardware devices connected to the computer device is able to implement self-booting, duration for booting the operating system by the BIOS can be reduced.

In a possible implementation, the obtaining the booting state of the hardware device includes: if the hardware device is a device able to run a device driver to implement self-booting, calling a status query interface of the hardware device; sending a query request to the hardware device through the status query interface, where the query request is used to query the booting state of the hardware device; and receiving a query response sent by the hardware device, where the query response carries the booting state of the hardware device.

In other words, the hardware device connected to the computer device may include the device able to run the device driver to implement self-booting, or may include a non-self-booting device. For a non-self-booting hardware device, after the hardware device is discovered through enumeration, the BIOS continues to initialize the hardware device in a manner of serially running a corresponding device driver. For a self-booting hardware device, the BIOS does not need to store and run a device driver corresponding to the hardware device, and only needs to communicate with the hardware device, to obtain a booting state of the hardware device. This reduces time consumed for initializing the hardware device in a BIOS phase.

In a possible implementation, the booting state of the hardware device includes any one of a first state, a second state, a third state, and a fourth state. The first state indicates that the BIOS is able to discover the hardware device through device enumeration. The second state indicates that, based on the first state, the computer device is enabled to configure the hardware device. The third state indicates that the hardware device is in a normal operating state based on the second state. The fourth state indicates that, based on the first state, the hardware device is in an abnormal state.

In other words, when the booting state of the hardware device is the first state, the BIOS may discover the hardware device through device enumeration, and send a status query request to the hardware device. When the booting state of the hardware device is the second state, the BIOS may obtain a resource requirement of the hardware device, and may allocate a corresponding resource to the hardware device based on the resource requirement. When the booting state of the hardware device is the third state, the BIOS does not need to process the hardware device; and after the operating system is booted, transfers information related to the hardware device and a control right to the operating system. When the booting state of the hardware device is the fourth state, the hardware device may communicate with the computer device, but a function of the hardware device cannot be normally used.

In a possible implementation, after the obtaining the booting state of the hardware device, the method further includes: performing device initialization on the hardware device based on the booting state of the hardware device.

In other words, in the BIOS phase, for the hardware device discovered through enumeration, if the hardware device is a self-booting device, the computer device may call the status query interface of the hardware device, to obtain the booting state of the hardware device, and perform differentiated management on the hardware device based on the booting state of the hardware device.

In a possible implementation, the method further includes: obtaining the booting state of the hardware device at an interval of each period; and performing device initialization on the hardware device based on the booting state of the hardware device.

In a possible implementation, the performing device initialization on the hardware device based on the booting state of the hardware device includes: if the booting state of the hardware device is the second state, allocating a resource to the hardware device based on a device resource requirement of the hardware device.

In a possible implementation, the method further includes: storing the booting state of the hardware device. Before obtaining the booting state of the hardware device at an interval of each period, the method further includes: if the currently stored booting state of the hardware device is not the third state, performing the step of obtaining the booting state of the hardware device at an interval of each period.

In a possible implementation, after obtaining the booting state of the hardware device at an interval of each period, the method further includes: updating the currently stored booting state of the hardware device.

It can be learned that, after the computer device is powered on and booted, for the hardware device discovered through device enumeration, in this application, after obtaining a booting state of each hardware device, the computer device may periodically obtain the booting state of each hardware device, and store and update the booting state of the hardware device. Therefore, in a running process of the operating system, a hardware device that can be normally used on the computer device may be determined based on the stored booting state of the hardware device, to call a functional interface of the normally used hardware device to perform a related operation.

According to a second aspect, a device booting apparatus is provided, and the device booting apparatus has a function of implementing behavior of the device booting method in the first aspect. The device booting apparatus includes at least one module, and the at least one module is configured to implement the device booting method provided in the first aspect.

According to a third aspect, a computer device is provided. The computer device includes a processor and a memory, and the memory is configured to store a computer program for performing the device booting method provided in the first aspect. The processor is configured to execute the computer program stored in the memory, to implement steps of the device booting method in the first aspect.

In a possible implementation, the computer device may further include a communication bus, and the communication bus is configured to establish a connection between the processor and the memory.

According to a fourth aspect, a computer-readable storage medium is provided. The storage medium stores instructions, and when the instructions are run on a computer device, the computer device is enabled to perform steps of the device booting method in the first aspect.

According to a fifth aspect, a computer program product including instructions is provided. When the instructions are run on a computer device, the computer device is enabled to perform steps of the device booting method in the first aspect. In other words, a computer program is provided. When the computer program is run on a computer device, the computer device is enabled to perform steps of the device booting method in the first aspect.

Technical effect achieved in the second aspect, the third aspect, the fourth aspect, and the fifth aspect is similar to technical effect achieved by the corresponding technical means in the first aspect. Details are not described herein again.

### BRIEF DESCRIPTION OF DRAWINGS

FIG. 1 is a diagram of serially booting hardware devices by a computer device according to an embodiment of this application;
FIG. 2 is a diagram of a structure of a computer device according to an embodiment of this application;
FIG. 3 is a schematic flowchart of a device booting method according to an embodiment of this application;
FIG. 4 is a diagram of a device booting state according to an embodiment of this application;
FIG. 5 is a logical diagram of booting a plurality of hardware devices by a computer device according to an embodiment of this application;
FIG. 6A to FIG. 6C are a schematic flowchart of booting a plurality of hardware devices by a computer device according to an embodiment of this application; and
FIG. 7 is a diagram of a structure of a device booting apparatus according to an embodiment of this application.

### DESCRIPTION OF EMBODIMENTS

To make objectives, technical solutions, and advantages of embodiments of this application clearer, the following further describes implementations of this application in detail with reference to accompanying drawings.

For ease of understanding, before a device booting method provided in embodiments of this application is described in detail, an application scenario and an implementation environment in embodiments of this application are first described.

The application scenario in embodiments of this application is described first.

A computer device usually needs to have a plurality of capabilities such as a storage capability, a communication capability, and a display capability. These capabilities are usually provided by hardware devices such as a storage device, a network device, and a display device that are connected to the computer device. As complexity of an operating system increases, types of hardware devices connected to the computer device are increasingly diversified, and more hardware devices access the operating system. For the hardware device, a corresponding function can be presented to the outside only after the hardware device accesses the operating system and completes function initialization.

During actual application, the hardware device usually accesses the computer device in manners such as hardware integration, a peripheral component interconnect express (peripheral component interconnect express, PCIe) standard, and a universal serial bus (universal serial bus, USB). However, regardless of which manner is used by the hardware device to access the computer device, for the hardware device that performs accessing, the computer device usually serially boots a plurality of hardware devices by using a mode of a hardware device and a device driver.

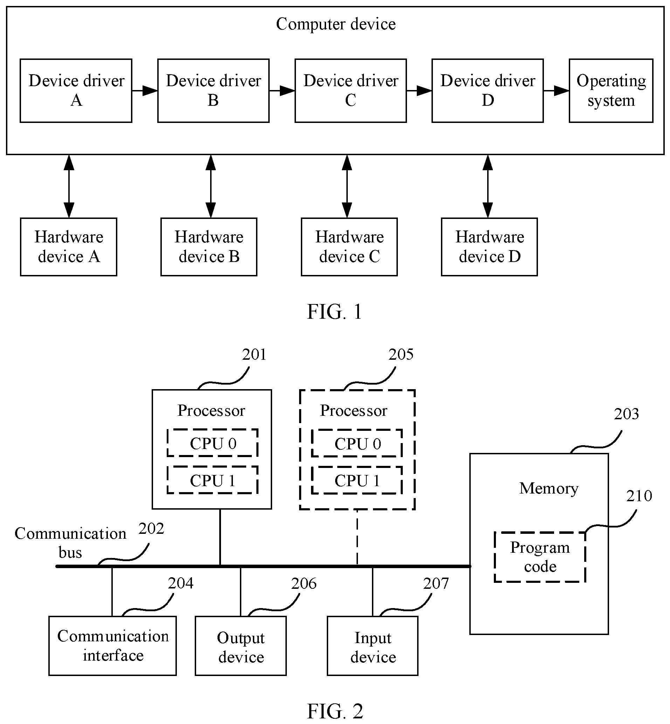

Refer to FIG. 1. For a plurality of hardware devices connected to a computer device, for example, a hardware device A, a hardware device B, a hardware device C, and a hardware device D, the computer device correspondingly stores device drivers corresponding to the plurality of hardware devices, that is, a device driver A, a device driver B, a device driver C, and a device driver D. After the computer device is powered on, a processor first runs a basic input/output system (basic input output system, BIOS), and scans a bus by using the BIOS, to discover, through enumeration, the plurality of hardware devices connected to the computer device. In the device enumeration process, each time a hardware device is discovered through enumeration, the BIOS runs a device driver of the hardware device, to initialize the hardware device; and allocates a corresponding system resource to the hardware device in the computer device, to ensure that the hardware device can operate normally. The rest may be deduced by analogy. When the BIOS serially loads and runs device drivers of all the hardware devices and at least one of the hardware devices discovered through device enumeration can be normally booted, the BIOS loads a bootloader of an operating system to boot the operating system (operating system, OS).

The hardware device includes but is not limited to a graphics card, a network interface card, a solid-state disk, and the like. This is not limited in embodiments of this application.

In the foregoing device booting manner, as a quantity of hardware devices connected to the computer device increases, booting time of the operating system also increases linearly, which severely affects system booting performance of the computer device.

A hardware device that accesses the computer device by using the PCIe bus may also be referred to as a PCIe device. Some PCIe devices support an option read-only memory (option read-only memory, Option ROM for short) capability, that is, a device driver run by the PCIe device in a BIOS phase may be stored in local ROM space of the PCIe device. When the PCIe device is connected to the computer device, and the processor of the computer device runs the BIOS to discover the PCIe device through enumeration, the BIOS may read the device driver from the local ROM space of the PCIe device and run the device driver.

In other words, because the BIOS and the operating system have different control and management requirements for the hardware device, the PCIe device usually runs different device drivers in the BIOS phase and an OS phase respectively. The BIOS performs basic initialization processing on the PCIe device by loading a simplified firmware driver in the BIOS phase. By loading a more complete device driver in the OS phase, the operating system can comprehensively control and manage the hardware device, and provide more diversified functions and services.

In the BIOS phase, the computer device needs to initialize the hardware device and allocate a necessary resource to the hardware device, to ensure that the hardware device operates normally. In this phase, the BIOS loads and runs a simplified device driver, which is also referred to as a BIOS device driver or a firmware device driver. The device driver is mainly used to initialize the device and provide basic functions, for example, booting, stopping, and reading/writing bytes of the device. The BIOS may perform basic configuration and control on the hardware device by running the device driver, to ensure that the operating system of the computer device can be booted and run normally. In the OS phase, the computer device needs to more comprehensively control and manage the hardware device, and provide more diversified and more complex functions. Therefore, the operating system of the computer device needs to load a more complete device driver, which is also referred to as an OS device driver. The OS device driver provides a higher-level capability to interact with and control the hardware device, for example, a read/write operation, interrupt processing, and task scheduling of the device. By running the OS device driver, the operating system can fully use performance and functions of the hardware device, and provide a better application programming interface and service.

It can be learned that the PCIe device may locally store the BIOS device driver, and a quantity of device drivers stored in the computer device is reduced. However, for each PCIe device, in an entire booting process of the operating system of the computer device, different device drivers need to be run in the BIOS phase and the OS phase respectively, to normally use device functions of the PCIe device. Consequently, efficiency is low.

In addition, because different architectures and central processing units (central processing unit, CPU) have different instruction sets, architecture characteristics, and performance characteristics, these differences may cause differences in implementation of device drivers. To ensure that the PCIe device can operate normally on different architectures and CPUs, a device manufacturer usually develops customized device drivers for different target platforms, and these drivers are optimized and adjusted based on characteristics and requirements of the target platforms, to obtain optimal performance and compatibility. In other words, one PCIe device may need to develop a plurality of sets of device drivers to meet requirements in different scenarios, and have a high requirement on device development.

In addition, because the computer device uses a serial booting manner, that is, sequentially runs device drivers corresponding to hardware devices discovered through enumeration, for the computer device, each hardware device needs to be ready within specific time. Therefore, the BIOS can discover the hardware device in time when scanning the bus. In other words, the hardware device needs to be ready before the BIOS performs device enumeration; otherwise, an enumeration window is missed, and the device is lost.

For the PCIe device, a booting timing requirement of the PCIe device is defined in the PCIe protocol. In the requirement, the PCIe device needs to be discovered 20 ms after PERST (a reset signal, usually indicating that the device is being reset or woken up) is pulled high, and can complete link establishment within 100 ms, that is, establish a normal communication connection to the computer device.

It can be learned that, because the computer device sequentially runs, in the serial booting manner, the device drivers corresponding to the hardware devices discovered through enumeration, there is also a specific requirement on booting time of each hardware device. Consequently, implementation of the hardware device is limited, and implementation difficulty of the hardware device is increased.

In view of this, embodiments of this application provide a device booting method. When a computer device is connected to a hardware device that is able to implement self-booting, the computer device does not need to store and run a device driver of the hardware device, and only needs to obtain a booting state of the hardware device in a BIOS phase. In other words, for the hardware device connected to the computer device, because a BIOS does not need to store and run the device driver of the hardware device that is able to implement self-booting, a quantity of device drivers run by the BIOS and time consumption for running are reduced, and booting duration of an operating system of the computer device is greatly shortened. This improves booting performance of the operating system.

The following describes the implementation environments in embodiments of this application.

FIG. 2 is a diagram of a structure of a computer device according to an embodiment of this application. The computer device may be the computer device shown in FIG. 1. The computer device includes at least one processor 201, a communication bus 202, a memory 203, and at least one communication interface 204.

The processor 201 may be a general-purpose central processing unit (central processing unit, CPU), a network processor (network processor, NP), a microprocessor, or one or more integrated circuits configured to implement the solutions of this application, for example, an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), generic array logic (generic array logic, GAL), or any combination thereof.

The communication bus 202 is configured to transfer information between the foregoing components. The communication bus 202 may be classified into an address bus, a data bus, a control bus, or the like. For ease of representation, only one bold line is used in FIG. 2 for representation, but this does not mean that there is only one bus or only one type of bus.

The memory 203 may be a read-only memory (read-only memory, ROM), a random access memory (random access memory, RAM), an electrically erasable programmable read-only memory (electrically erasable programmable read-only memory, EEPROM), an optical disc (including a compact disc read-only memory (compact disc read-only memory, CD-ROM), a compact disc, a laser disc, a digital versatile disc, a Blu-ray disc, or the like), a magnetic disk storage medium or another magnetic storage device, or any other medium that can be configured to carry or store expected program code in a form of instructions or data structures and that can be accessed by a computer, but is not limited thereto. The memory 203 may exist independently, and is connected to the processor 201 through the communication bus 202. The memory 203 may alternatively be integrated with the processor 201.

The communication interface 204 is configured to communicate with another device or a communication network by using any apparatus like a transceiver. The communication interface 204 includes a wired communication interface, or may include a wireless communication interface. The wired communication interface may be, for example, an Ethernet interface. The Ethernet interface may be an optical interface, an electrical interface, or a combination thereof. The wireless communication interface may be a wireless local area network (wireless local area network, WLAN) interface, a cellular network communication interface, a combination thereof, or the like.

In an example, the processor 201 may include one or more CPUs, for example, a CPU 0 and a CPU 1 shown in FIG. 2.

In an example, the computer device may include a plurality of processors, for example, the processor 201 and a processor 205 shown in FIG. 2. Each of the processors may be a single-core processor, or may be a multi-core processor. The processor herein may be one or more devices, circuits, and/or processing cores configured to process data (for example, computer program instructions).

In some embodiments, the computer device may further include an output device 206 and an input device 207. The output device 206 communicates with the processor 201, and may display information in a plurality of manners. For example, the output device 206 may be a liquid crystal display (liquid crystal display, LCD), a light emitting diode (light emitting diode, LED) display device, a cathode ray tube (cathode ray tube, CRT) display device, or a projector (projector). The input device 207 communicates with the processor 201, and may receive an input from a user in a plurality of manners. For example, the input device 207 may be a mouse, a keyboard, a touchscreen device, a sensing device, or the like.

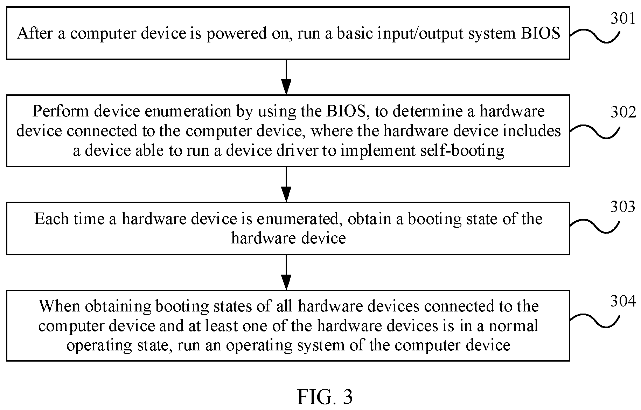

In some embodiments, the memory 203 is configured to store program code 210 for performing the solutions of this application, and the processor 201 may execute the program code 210 stored in the memory 203. The program code 210 may include one or more software modules. The computer device may implement, by using the processor 201 and the program code 210 in the memory 203, the device booting method provided in the following embodiment in FIG. 3.

FIG. 3 is a flowchart of a device booting method according to an embodiment of this application. The method is applied to the foregoing computer device. Refer to FIG. 3. The method includes the following steps.

**Step 301:** After the computer device is powered on, run a basic input/output system BIOS.

The BIOS is a firmware program that is first run after the computer device is powered on, and is responsible for tasks such as initializing a hardware device and loading an operating system. When the BIOS is run, the BIOS enumerates hardware devices accessing the computer device, that is, identifies and lists various hardware devices (or components) such as a memory, a hard disk, a graphics card, a network interface card, and an audio card in a computer.

**Step 302:** Perform device enumeration by using the BIOS, to determine a hardware device connected to the computer device, where the hardware device includes a device able to run a device driver to implement self-booting.

When the BIOS performs device enumeration, a device may be lost. In other words, the BIOS does not discover one or more hardware devices connected to the computer device when scanning a bus, which is considered as that the hardware device is lost in a device enumeration process. In view of this, the hardware devices that are discovered by the BIOS through enumeration and that are connected to the computer device in step 302 may be all hardware devices actually connected to the computer device, or may be some hardware devices actually connected to the computer device. A quantity of hardware devices that are discovered through enumeration is not limited in embodiments of this application.

As an important process in a computer system, device enumeration relates to reading various descriptor information from the hardware device connected to the computer device, so that the computer device can identify and manage the hardware device, and communicate with the hardware device. This process usually occurs in a booting phase of the computer device. The BIOS performs device enumeration to identify and manage the hardware device, and transfers related information of the hardware device to the operating system. Alternatively, after the hardware device is connected to the operating system, the operating system performs device enumeration, and runs a complete device driver of the hardware device, to perform comprehensive and effective management on the hardware device.

In some embodiments, the process in which the BIOS performs device enumeration may include the following steps (1) to (5).

### (1) Detection and identification

The BIOS scans the bus, to detect all hardware devices connected to the bus of the computer device, and identify types and characteristics of these hardware devices. For example, the types and characteristics of the hardware devices are usually identified by reading hardware addresses, configuration information, and other identifiers of the hardware devices.

### (2) Read a descriptor

The BIOS reads a data structure that is referred to as a "descriptor" from the discovered hardware device. The descriptor includes important information of the hardware device, for example, a name, a function, and a resource requirement of the hardware device.

### (3) Allocate resources

After reading the descriptor, the BIOS may allocate necessary resources such as a memory and an input/output (input/output, I/O) port to the discovered hardware device, that is, allocate resources necessary for normal operation of the hardware device.

### (4) Load a driver

Based on information about the read descriptor, the BIOS may determine which device drivers need to be loaded to communicate with the discovered hardware devices. The hardware driver is software that allows the computer device to interact with the hardware device.

### (5) Initialize a device

Once the driver is loaded, the computer device may initialize the hardware device by using the BIOS, so that the hardware device can perform data transmission or another operation with the computer device.

It should be noted that, after performing the step (1) to discover a hardware device through enumeration, the BIOS performs subsequent steps (2) to (5) on the hardware device. In other words, for the devices discovered through enumeration, the BIOS sequentially performs subsequent processing on the hardware devices discovered through enumeration in a discovery sequence of the hardware devices.

It can be learned that, in embodiments of this application, the hardware device may support local boot, and provide a status query interface to the outside, to implement the solutions in embodiments of this application. This can reduce repeated development and execution of device drivers of hardware devices, and improve booting efficiency of the hardware devices. In addition, the hardware device provides the status query interface to the outside, and booting of the operating system of the computer device does not impose any limit on booting duration of the hardware device, to simplify implementation of the hardware device.

**Step 303:** Each time a hardware device is discovered through enumeration, obtain a booting state of the hardware device.

As described above, the hardware device connected to the computer device may include the device able to run the device driver to implement self-booting, or may include a non-self-booting device. For a non-self-booting hardware device, after the hardware device is discovered through enumeration, the BIOS continues to initialize the hardware device in a manner of serially running a corresponding device driver. For a self-booting hardware device, the BIOS does not need to store and run a device driver corresponding to the hardware device, and only needs to communicate with the hardware device, to obtain a booting state of the hardware device. This reduces time consumed for initializing the hardware device in a BIOS phase.

Therefore, in a possible implementation, an implementation process of step 303 may be: if the hardware device is a device able to run a device driver to implement self-booting, calling a status query interface of the hardware device; sending a query request to the hardware device through the status query interface, where the query request is used to query the booting state of the hardware device; and receiving a query response sent by the hardware device, where the query response carries the booting state of the hardware device.

In some embodiments, the booting state of the hardware device includes any one of a first state, a second state, a third state, and a fourth state. The first state indicates that the BIOS is able to discover the hardware device through device enumeration. The second state indicates that, based on the first state, the computer device is enabled to configure the hardware device. The third state indicates that the hardware device is in a normal operating state based on the second state. The fourth state indicates that, based on the first state, the hardware device is in an abnormal state.

In other words, when the booting state of the hardware device is the first state, the BIOS may discover the hardware device through device enumeration, and send a status query request to the hardware device. When the booting state of the hardware device is the second state, the BIOS may obtain a resource requirement of the hardware device, and may allocate a corresponding resource to the hardware device based on the resource requirement. When the booting state of the hardware device is the third state, the BIOS does not need to process the hardware device; and after the operating system is booted, transfers information related to the hardware device and a control right to the operating system. When the booting state of the hardware device is the fourth state, the hardware device may communicate with the computer device, but a function of the hardware device cannot be normally used.

It can be learned that, for the self-booting hardware device, embodiments of this application provide a status query interface of the hardware device and several booting states of the hardware device, so that the self-booting hardware device and the computer device can simply communicate with each other through the status query interface. This helps the BIOS that is run in the computer device obtain, by calling the status query interface, a current booting state of the self-booting hardware device.

The following describes in detail the status query interface and the booting states of the hardware device that are defined in embodiments of this application.

In some embodiments, the status query interface may be implemented based on a format of a call ID. The call ID is a unique character string, and is usually used to identify and associate a specific request or transaction. After the call ID is added to an application programming interface (application programming interface, API) or a service interface, each request transmitted through the interface may be traced and managed.

In an example, the status query interface may be represented by a 32-bit hexadecimal number. For example, a call ID of the status query interface may be 0xC00B2B02. Table 1 shows a value corresponding to each function character bit in the call ID.

**Table 1**

| Message format [31:30] | Reserved bits [29:28] | Device type [27:12] | Status query function ID [11:0] |
|---|---|---|---|
| 0x3 | 0x0 | 0xB2 | 0xB02 |

A function description of the status query interface is obtaining a current booting state of the hardware device; a type of the status query interface is a synchronization function, that is, a sent query request needs to wait for a corresponding query response; and a read/write attribute of the status query interface is read-only, that is, the status query interface can only be used to query the booting state of the hardware device, and cannot modify the booting state.

For the status query interface, a format and definition of input content are shown in Table 2, a format and definition of output content are shown in Table 3, and a format and definition of a return value of the status query interface are shown in Table 4.

**Table 2**

| Field (field) | Offset (offset) | Size (size) | Description (description) |
|---|---|---|---|
| Device address | 0 | 4 | Indicates device address information of a hardware device whose booting state needs to be queried |

The device address may be a bus device function (bus device function, BDF) address of a PCIe device or a channel (channel) number in a universal bus, and may be determined based on a device type of the hardware device. This is not limited in embodiments of this application.

**Table 3**

| Field (field) | Offset (offset) | Size (size) | Description (description) |
|---|---|---|---|
| Booting state | 0 | 2 | Current booting state of a hardware device: |
| | | | 0: first state |
| | | | 1: second state |
| | | | 2: third state |
| | | | 3: fourth state |

It should be understood that, during actual application, another identifier may be used to distinguish and represent the four booting states of the hardware device. This is not limited in embodiments of this application.

**Table 4**

| Field (field) | Offset (offset) | Size (size) | Description (description) |
|---|---|---|---|
| Return value | 0 | 4 | 0: Status query succeeds |
| | | | -1: Status query fails |

In other words, after the BIOS calls the status query interface to send the query request to the hardware device, if a corresponding query response is received from the status query interface, it indicates that status query succeeds, and a return value of calling the status query interface is 0. If no corresponding query response is received from the status query interface after the query request is sent, it indicates that status query fails, and a return value of calling the status query interface is -1.

It should be understood that, when the return value of calling the status query interface by the BIOS is -1, a reason may be that the request times out, the hardware device fails to establish a link, the hardware device does not support self-booting, a packet error, or the like. This is not limited in embodiments of this application.

When the return value is -1, the BIOS may continue to query a current booting state of another hardware device, or may continue to attempt to obtain the booting state of the hardware device. A quantity of attempts may be a preset quantity of times, for example, 1, 2, or 3, and may be flexibly set based on an actual requirement. This is not limited in embodiments of this application.

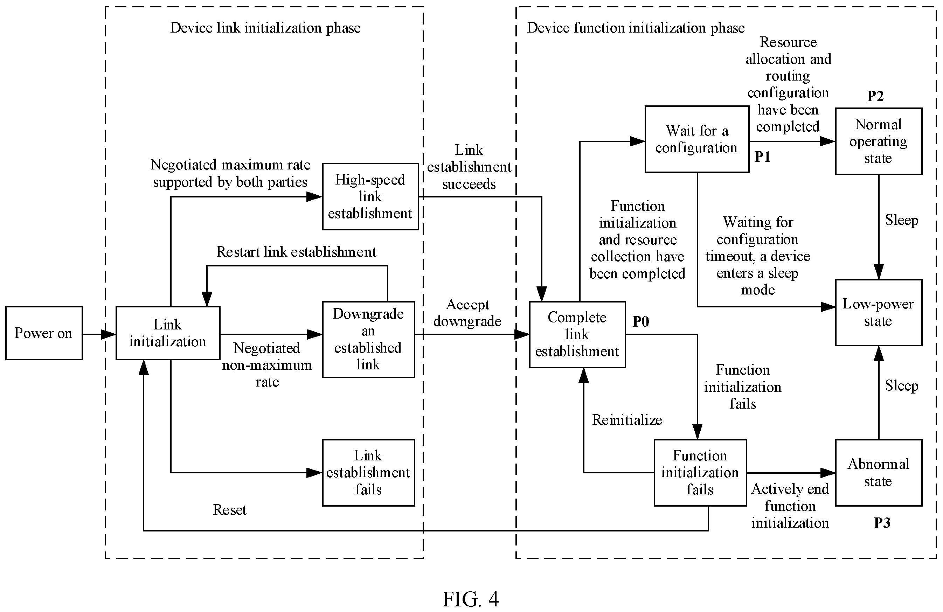

Then, with reference to FIG. 4, the four booting states of the self-booting hardware device in a power-on and self-booting process are explained and described.

Refer to FIG. 4. In some embodiments, after the self-booting hardware device is powered on, a booting process of the hardware device may be divided into a device link initialization phase and a device function initialization phase. In the device link initialization phase, the hardware device establishes a communication link to the computer device through negotiation. After link establishment is completed, the hardware device may communicate with the computer device, and can receive a status query request sent by the computer device side. In other words, a booting state of the hardware device that completes link establishment is the first state (identified by P0 in FIG. 4). In the device function initialization phase, the hardware device first completes function initialization, and completes resource collection of the hardware device, to determine a resource requirement of the hardware device, and waits for the computer device to allocate a resource to the hardware device. In this case, a booting state of the hardware device is the second state (identified by P1 in FIG. 4). Further, after the computer device allocates the resource to the hardware device based on the resource requirement of the hardware device, all functions of the hardware device can be normally used, and the hardware device can normally operate. In this case, a booting state of the hardware device is the third state (identified by P2 in FIG. 4). In addition, if the resource cannot be normally allocated to the hardware device, or function initialization fails, or the like, a booting state of the hardware device is the fourth state (identified by P3 in FIG. 4).

It should be noted that FIG. 4 is merely an example for description. During actual application, states of the hardware device in the self-booting process may be defined in another manner, are not limited to the foregoing four booting states, and may include more or fewer booting states. This is not limited to the division manner shown in FIG. 4. This is not limited in embodiments of this application.

After the booting state of the hardware device is obtained, device initialization may be performed on the hardware device based on the booting state of the hardware device.

In a possible implementation, the process of performing device initialization on the hardware device based on the booting state of the hardware device may be as follows: if the booting state of the hardware device is the second state, allocating a resource to the hardware device based on a device resource requirement of the hardware device.

In other words, when the booting state of the hardware device is the second state, the computer device may allocate the resource to the hardware device in time in the BIOS phase based on the booting state of the hardware device, to ensure that the hardware device can be in a normal operating state. Therefore, the computer device can normally use related functions of the hardware device.

It should be noted that allocating the resource to the hardware device may include allocating a memory resource, allocating an I/O resource, and allocating another resource. If the hardware device is a network device, allocating the resource to the hardware device further includes one or more of an Internet protocol (Internet protocol, IP) address configuration, a subnet mask configuration, a default gateway and domain name system (domain name system, DNS) server configuration, and the like. This is not limited in embodiments of this application.

Allocating the memory resource is allocating necessary memory space to the hardware device for storing data or executing a task. Allocating the I/O resource is allocating a necessary input/output port, interrupt number, and the like to the hardware device. Allocating the another resource includes a clock, a power supply, and the like, to ensure normal running of the hardware device. The IP address configuration is allocating a unique IP address to the hardware device, to uniquely identify the hardware device in the network. The subnet mask configuration is determining a network segment in which the hardware device is located. The default gateway and DNS server configuration is configuring a proper gateway and DNS server for the hardware device based on a network environment.

In this embodiment of this application, only device initialization performed when the booting state of the hardware device is the second state is described. When the current booting state of the hardware device is the first state or the third state, the hardware device does not need to be processed, and only the booting state of the hardware device needs to be recorded. When the current booting state of the hardware device is the fourth state, the hardware device may alternatively be rebooted, to attempt to repair the hardware device; or the hardware device is reserved, but in a running process of the computer device, the hardware device is used only as a data/information forwarding device, and another functional interface of the hardware device is not called.

In an example, Table 5 shows a correspondence between a booting state of the hardware device and a device initialization manner.

**Table 5**

| Booting state | Identifier | Status description | Device initialization manner |
|---|---|---|---|
| First state | P0 | Hardware device side: A communication link has been established, and a query request (for querying a booting state) of a computer device may be responded to, but device function initialization is not completed. | Record that the hardware device can be discovered. Do not support further processing. |
| | | Computer device side: A BIOS can discover a hardware device through device enumeration. | |
| Second state | P1 | Hardware device side: A communication link is established, internal function initialization of the hardware device is completed, a resource requirement of the hardware device is determined, and a resource query packet of the computer device may be responded to, but resource configuration is not completed. | Allocate a resource to the hardware device based on the device resource requirement of the hardware device. |
| Third state | P2 | The hardware device can normally operate. | Record a booting state of the hardware device. |
| | | Computer device side: A functional interface of the hardware device can be normally called, a device resource can be accessed, and the like. | |
| Fourth state | P3 | Hardware device side: A communication link has been | The following processing may be selected: |
| | | established, but device function initialization is abnormal. | (1) Reboot the hardware device and try to repair the hardware device; and |
| | | Computer device side: The BIOS can discover the hardware device through device enumeration, but functions of the hardware device cannot be normally used. | |
| | | | (2) reserve the hardware device, use the hardware device only as a forwarding device, and call no other functional interface of the hardware device. |

It can be learned that, in embodiments of this application, in the BIOS phase, for the hardware device discovered through enumeration, if the hardware device is a self-booting device, the computer device may call the status query interface of the hardware device, to obtain the booting state of the hardware device, and perform differentiated management on the hardware device based on the booting state of the hardware device.

It should be noted that, after the booting state of the hardware device is obtained, step 304 may be performed, or device initialization may be first performed on the hardware device based on the booting state of the hardware device, or step 304 and device initialization may be performed in parallel. An execution time sequence of step 304 and device initialization is not limited in this embodiment of this application.

In some embodiments, for all hardware devices discovered through enumeration, for self-booting hardware devices, after the computer device obtains a booting state of each hardware device, it is considered that some hardware devices may currently not be in the third state, but may subsequently enter the third state. Therefore, the computer device may periodically obtain the booting state of the hardware device discovered through enumeration, and initialize the hardware device.

In other words, the device booting method provided in embodiments of this application further includes: obtaining the booting state of the hardware device at an interval of each period; and performing device initialization on the hardware device based on the booting state of the hardware device.

A period value may be any preset value, for example, 100 ms or 10s. This is not limited in embodiments of this application.

After obtaining the booting state of the hardware device, the computer device may store the booting state of the hardware device. In this case, before the booting state of the hardware device is obtained at an interval of each period, whether the currently stored booting state of the hardware device is the third state may be first determined based on the stored booting state of the hardware device. If the currently stored booting state of the hardware device is not the third state, the step of obtaining the booting state of the hardware device at an interval of each period is performed.

Certainly, when the booting state of the hardware device is periodically obtained, booting states of all the hardware devices may also be obtained, instead of obtaining only a booting state of a hardware device that is not in the third state. This is not limited in this embodiment of this application.

In a possible implementation, after obtaining the booting state of the hardware device at an interval of each period, the device booting method provided in embodiments of this application further includes: updating the currently stored booting state of the hardware device.

It can be learned that, in embodiments of this application, after the computer device is powered on and booted, for the hardware device discovered through device enumeration, after obtaining a booting state of each hardware device, the computer device may periodically obtain the booting state of each hardware device, and store and update the booting state of the hardware device. Therefore, in a running process of the operating system, a hardware device that can be normally used on the computer device may be determined based on the stored booting state of the hardware device, to call a functional interface of the normally used hardware device to perform a related operation.

**Step 304:** When obtaining booting states of all hardware devices connected to the computer device and at least one of the hardware devices is in a normal operating state, run the operating system of the computer device.

It should be noted that "all the hardware devices connected to the computer device" herein are not all hardware devices physically connected to the computer device, but hardware devices discovered through enumeration in step 302 and step 303; or may be all hardware devices physically connected to the computer device; or may be only some hardware devices physically connected to the computer device.

There are devices in the hardware devices discovered through enumeration that are able to implement self-booting, and the self-booting hardware devices independently boot. Therefore, booting of the operating system no longer requires completion of booting of all the hardware devices, provided that one hardware device in the hardware devices discovered through enumeration can be run normally, that is, the hardware device may be used as a booting device to load and run the operating system, so as to run the operating system of the computer device.

In conclusion, in embodiments of this application, after the computer device is powered on, the BIOS is run, and the BIOS performs device enumeration to determine the hardware device connected to the computer device. When the hardware device is able to implement self-booting, the computer device does not need to store and run the device driver of the hardware device, and may directly obtain the booting state of the hardware device. Therefore, provided that at least one of the hardware devices connected to the computer device is able to implement self-booting, duration for booting the operating system by the BIOS can be reduced.

According to the device booting method shown in the foregoing embodiments, during actual application, a device that can normally boot may be selected, as an administrator device, from the hardware devices connected to the computer device. The administrator device performs step 301 to step 304, to obtain the booting state of the self-booting hardware device, and perform different management based on the booting state of the hardware device. Therefore, booting of the operating system no longer requires that all the hardware devices are ready, and the operating system can be loaded and booted provided that booting of a hardware device (namely, a booting device) required for booting the operating system is completed.

The administrator device is a processor in the computer device by default, or may be another hardware device in the computer device. This is not limited in embodiments of this application. In addition, for a data center, the administrator device may be a processor in any host, or a main device that manages a plurality of distributed hardware devices/computer nodes.

For ease of understanding, the following uses an example in which the administrator device serves as an execution body to describe a specific implementation procedure of the device booting method provided in embodiments of this application.

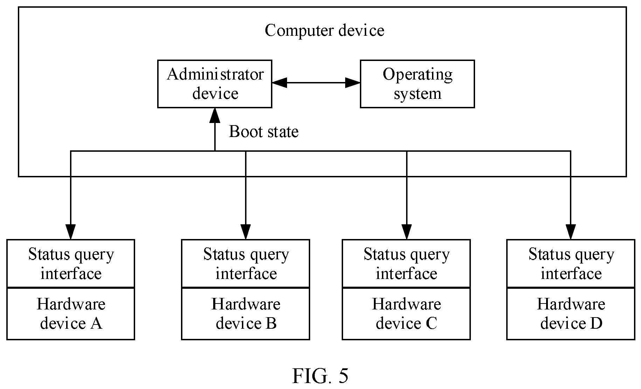

Refer to FIG. 5. A hardware device A, a hardware device B, a hardware device C, and a hardware device D that are able to implement self-booting may store and run hardware device drivers and complete device initialization, to implement self-booting. Therefore, the hardware device may provide a status query interface to the outside, to respond to a query request sent by the computer device, and feed back a current booting state of the hardware device in time. After the computer device is powered on and booted and device initialization is completed, for the hardware device discovered through enumeration, if the hardware device is a self-booting device, the administrator device calls a corresponding status query interface to send a query request to the hardware device, to obtain a booting state of the hardware device. When one of the hardware devices connected to the computer device is in a normal operating state, the operating system of the computer device may be loaded and run.

In a possible implementation, for the hardware device discovered through enumeration, alternatively, a query request may be directly sent to the hardware device. If the hardware device may return the booting state of the hardware device in response to the query request, the hardware device is a device that is able to implement self-booting.

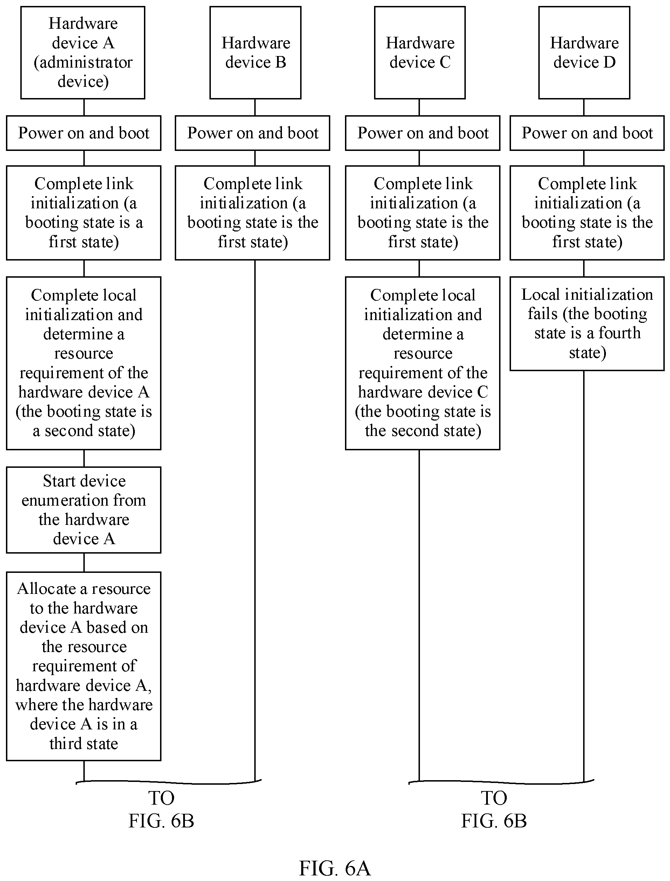

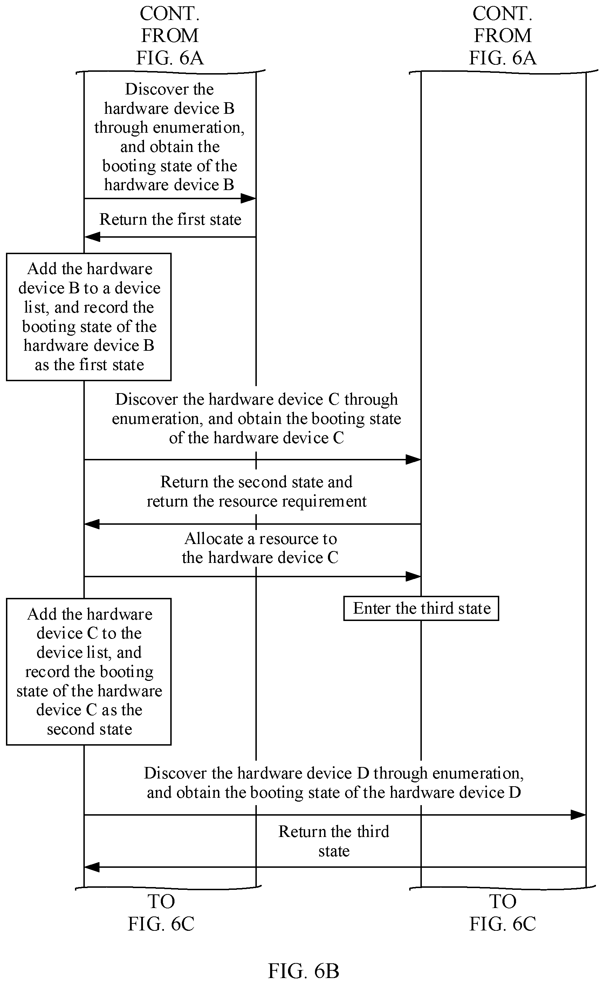

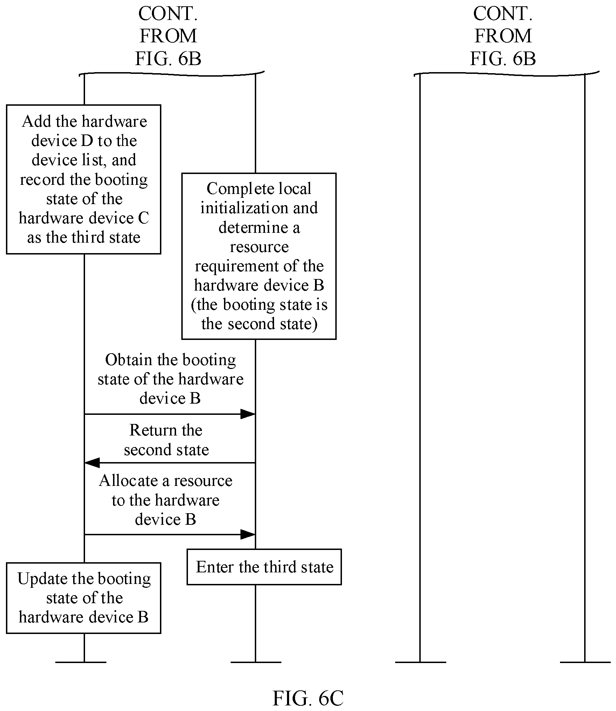

Refer to FIG. 6A to FIG. 6C. In a device booting procedure provided in embodiments of this application, if the hardware device A, the hardware device B, the hardware device C, and the hardware device D connected to the computer device are able to implement self-booting, after the computer device is powered on, all the hardware devices connected to the computer device can be simultaneously powered on, and synchronously perform local booting procedures. The local booting procedure of the hardware device is as follows: The hardware device runs local firmware stored in the hardware device, to complete link initialization by using the local firmware of the device. After a communication link is established, the booting state of the hardware device is the first state. In this case, the hardware device can respond to a management command used when the administrator device performs device enumeration. Then, the hardware device continues to perform local initialization, for example, initializing a memory and another hardware module. In this case, the booting state of the hardware device is the second state. After determining a resource requirement of the hardware device, the hardware device waits for the computer device to perform resource configuration. Further, after the computer device allocates a resource to the hardware device based on the resource requirement of the hardware device, the booting state of the hardware device is the third state, and the hardware device can be normally run and used.

For the computer device, when device enumeration is performed in the BIOS phase, the administrator device is used as an enumeration start point. After discovering a hardware device through enumeration, the administrator device adds the hardware device to a device list, queries a current booting state of the hardware device, and performs different processing based on different booting states. The following cases are included:
In a first case, the hardware device establishes only a communication link, and may be discovered through enumeration, but has not completed local initialization, that is, the hardware device is in the first state, for example, the hardware device B shown in FIG. 6A to FIG. 6C. In this case, the administrator device does not need to allocate a resource to the hardware device B, and only records that the hardware device B can be identified and discovered, and a booting state of the hardware device B is the first state.

After device enumeration is completed, the booting state of the hardware device B may be periodically queried. When the booting state of the hardware device B is the second booting state, a resource is allocated to the hardware device B based on a resource requirement of the hardware device B.

In a second case, the hardware device has completed local initialization, to determine a resource requirement of the hardware device, and supports the computer device in performing configuration, that is, the hardware device is in the second state, for example, the hardware device C shown in FIG. 6A to FIG. 6C. In this case, after discovering the hardware device C through enumeration, the administrator device allocates a resource to the hardware device C based on the resource requirement of the hardware device C, so that the hardware device C can enter the third state, and can be normally run, and functions of the hardware device C can be normally used.

In a third case, initialization of the hardware device fails, that is, the hardware device is in the fourth state, for example, the hardware device D shown in FIG. 6A to FIG. 6C. In this case, the administrator device does not need to allocate a resource to the hardware device D, but may choose to reboot the hardware device D based on a requirement.

It should be noted that, for the foregoing related implementation details and corresponding beneficial effect, refer to the method embodiment shown in FIG. 3. Details are not described herein again.

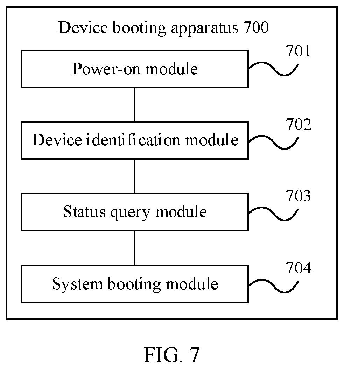

FIG. 7 is a diagram of a structure of a device booting apparatus according to an embodiment of this application. The device booting apparatus may be implemented as a part or the entire of a computer device by using software, hardware, or a combination thereof. The computer device may be the device shown in FIG. 2. Refer to FIG. 7. The device booting apparatus 700 includes: a power-on module 701, a device identification module 702, a status query module 703, and a system booting module 704.

The power-on module 701 is configured to: after the computer device is powered on, run a basic input/output system BIOS. For a detailed implementation process, refer to related content in step 301. Details are not described herein again.

The device identification module 702 is configured to perform device enumeration by using the BIOS, to determine a hardware device connected to the computer device, where the hardware device includes a device able to run a device driver to implement self-booting. For a detailed implementation process, refer to related content in step 302. Details are not described herein again.

The status query module 703 is configured to: each time a hardware device is discovered through enumeration, obtain a booting state of the hardware device. For a detailed implementation process, refer to related content in step 303. Details are not described herein again.

The system booting module 704 is configured to: when obtaining booting states of all hardware devices connected to the computer device and at least one of the hardware devices is in a normal operating state, run an operating system of the computer device. For a detailed implementation process, refer to related content in step 304. Details are not described herein again.

In a possible implementation, the status query module 703 includes:
an interface call unit, configured to: if the hardware device is a device able to run a device driver to implement self-booting, call a status query interface of the hardware device;
a sending unit, configured to send a query request to the hardware device through the status query interface, where the query request is used to query the booting state of the hardware device; and
a receiving unit, configured to receive a query response sent by the hardware device, where the query response carries the booting state of the hardware device.

In a possible implementation, the booting state of the hardware device includes any one of a first state, a second state, a third state, and a fourth state.

The first state indicates that the BIOS is able to discover the hardware device through device enumeration.

The second state indicates that, based on the first state, the computer device is enabled to configure the hardware device.

The third state indicates that the hardware device is in a normal operating state based on the second state.

The fourth state indicates that, based on the first state, the hardware device is in an abnormal state.

In a possible implementation, after obtaining the booting state of the hardware device, the status query module 703 is further configured to:
perform device initialization on the hardware device based on the booting state of the hardware device.

In a possible implementation, the status query module 703 is further configured to:
obtain the booting state of the hardware device at an interval of each period; and
perform device initialization on the hardware device based on the booting state of the hardware device.

In a possible implementation, the status query module 703 is further configured to:
if the booting state of the hardware device is the second state, allocate a resource to the hardware device based on a device resource requirement of the hardware device.

In a possible implementation, the status query module 703 is further configured to:
store the booting state of the hardware device.

Before obtaining the booting state of the hardware device at an interval of each period, the status query module 703 is further configured to:
if the currently stored booting state of the hardware device is not the third state, perform the step of obtaining the booting state of the hardware device at an interval of each period.

In a possible implementation, after obtaining the booting state of the hardware device at an interval of each period, the status query module 703 is further configured to:
update the currently stored booting state of the hardware device.

In embodiments of this application, after the computer device is powered on, the BIOS is run, and the BIOS performs device enumeration to determine the hardware device connected to the computer device. When the hardware device is able to implement self-booting, the computer device does not need to store and run the device driver of the hardware device, and may directly obtain the booting state of the hardware device. Therefore, provided that at least one of the hardware devices connected to the computer device is able to implement self-booting, duration for booting the operating system by the BIOS can be reduced.

It should be noted that when the device booting apparatus provided in the foregoing embodiment boots the operating system of the computer device, division into the functional modules is merely used as an example for description. During actual application, the foregoing functions may be allocated to and completed by different functional modules based on a requirement, that is, an internal structure of the apparatus is divided into different functional modules, to implement all or some of the functions described above. In addition, the device booting apparatus provided in the foregoing embodiment and the device booting method embodiments belong to a same concept. For specific implementation processes thereof, refer to the method embodiments. Details are not described herein again.

An embodiment of this application further provides a computer-readable storage medium. The computer-readable storage medium may be any usable medium that can be stored in a computer device, or a data storage device like a data center including one or more usable media. The usable medium may be a magnetic medium (for example, a floppy disk, a hard disk drive, or a magnetic tape), an optical medium (for example, a DVD), a semiconductor medium (for example, a solid-state disk), or the like. The computer-readable storage medium includes instructions, and the instructions instruct a computer device to perform the steps of the device booting method shown in the foregoing embodiments.

An embodiment of this application further provides a computer program product including instructions. The computer program product may be software or a program product that includes instructions and that can be run on a compute device or that can be stored in any usable medium. When the computer program product runs on at least one computer device, the at least one computer device is enabled to perform the steps of the device booting method shown in the foregoing embodiments.

All or some of the foregoing embodiments may be implemented by software, hardware, firmware, or any combination thereof. When software is used to implement the embodiments, all or a part of the embodiments may be implemented in a form of a computer program product. The computer program product includes one or more computer instructions. When the computer instructions are loaded and executed on the computer, the procedure or functions according to the embodiments of this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, a computer, a server or a data center to another website, computer, server or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, a solid-state disk (solid-state disk, SSD)), or the like. It should be noted that the computer-readable storage medium mentioned in embodiments of this application may be a nonvolatile storage medium, that is, may be a non-transitory storage medium.

It should be understood that "a plurality of" in this specification means two or more. In descriptions of embodiments of this application, "/" indicates "or" unless otherwise specified. For example, A/B may indicate A or B. In this specification, "and/or" describes only an association relationship between associated objects and indicates that three relationships may exist. For example, A and/or B may indicate the following three cases: Only A exists, both A and B exist, and only B exists. In addition, to clearly describe technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

It should be noted that information (including but not limited to user equipment information, personal information of a user, and the like), data (including but not limited to data used for analysis, stored data, displayed data, and the like), and signals in embodiments of this application are used under authorization by the user or full authorization by all parties, and capturing, use, and processing of related data need to conform to related laws, regulations, and standards of related countries and regions.

The foregoing descriptions are merely embodiments of this application, but are not intended to limit this application. Any modification, equivalent replacement, or improvement made without departing from the spirit and principle of this application should fall within the protection scope of this application.

## Claims

1. A device booting method, wherein the method comprises:
after a computer device is powered on, running a basic input/output system BIOS;
performing device enumeration by using the BIOS, to determine a hardware device connected to the computer device, wherein the hardware device comprises a device able to run a device driver to implement self-booting;
each time a hardware device is discovered through enumeration, obtaining a booting state of the hardware device; and
when obtaining booting states of all hardware devices connected to the computer device and at least one of the hardware devices is in a normal operating state, running an operating system of the computer device.

2. The method according to claim 1, wherein the obtaining the booting state of the hardware device comprises:
if the hardware device is a device able to run a device driver to implement self-booting, calling a status query interface of the hardware device;
sending a query request to the hardware device through the status query interface, wherein the query request is used to query the booting state of the hardware device; and
receiving a query response sent by the hardware device, wherein the query response carries the booting state of the hardware device.

3. The method according to claim 1 or 2, wherein the booting state of the hardware device comprises any one of a first state, a second state, a third state, and a fourth state;
the first state indicates that the BIOS is able to discover the hardware device through device enumeration;
the second state indicates that, based on the first state, the computer device is enabled to configure the hardware device;
the third state indicates that the hardware device is in a normal operating state based on the second state; and
the fourth state indicates that, based on the first state, the hardware device is in an abnormal state.

4. The method according to claim 3, wherein after obtaining the booting state of the hardware device, the method further comprises:
performing device initialization on the hardware device based on the booting state of the hardware device.

5. The method according to claim 3 or 4, wherein the method further comprises:
obtaining the booting state of the hardware device at an interval of each period; and
performing device initialization on the hardware device based on the booting state of the hardware device.

6. The method according to claim 4 or 5, wherein the performing device initialization on the hardware device based on the booting state of the hardware device comprises:
if the booting state of the hardware device is the second state, allocating a resource to the hardware device based on a device resource requirement of the hardware device.

7. The method according to claim 5, wherein the method further comprises:
storing the booting state of the hardware device; and
before obtaining the booting state of the hardware device at an interval of each period, the method further comprises:
if the currently stored booting state of the hardware device is not the third state, performing the step of obtaining the booting state of the hardware device at an interval of each period.

8. The method according to claim 7, wherein after obtaining the booting state of the hardware device at an interval of each period, the method further comprises:
updating the currently stored booting state of the hardware device.

9. A device booting apparatus, wherein the apparatus comprises:
a power-on module, configured to: after a computer device is powered on, run a basic input/output system BIOS;
a device identification module, configured to perform device enumeration by using the BIOS, to determine a hardware device connected to the computer device, wherein the hardware device comprises a device able to run a device driver to implement self-booting;
a status query module, configured to: each time a hardware device is discovered through enumeration, obtain a booting state of the hardware device; and
a system booting module, configured to: when obtaining booting states of all hardware devices connected to the computer device and at least one of the hardware devices is in a normal operating state, run an operating system of the computer device.

10. The apparatus according to claim 9, wherein the status query module comprises:
an interface call unit, configured to: if the hardware device is a device able to run a device driver to implement self-booting, call a status query interface of the hardware device;
a sending unit, configured to send a query request to the hardware device through the status query interface, wherein the query request is used to query the booting state of the hardware device; and
a receiving unit, configured to receive a query response sent by the hardware device, wherein the query response carries the booting state of the hardware device.

11. The apparatus according to claim 9 or 10, wherein the booting state of the hardware device comprises any one of a first state, a second state, a third state, and a fourth state;
the first state indicates that the BIOS is able to discover the hardware device through device enumeration;
the second state indicates that, based on the first state, the computer device is enabled to configure the hardware device;
the third state indicates that the hardware device is in a normal operating state based on the second state; and
the fourth state indicates that, based on the first state, the hardware device is in an abnormal state.

12. The apparatus according to claim 11, wherein after obtaining the booting state of the hardware device, the status query module is further configured to:
perform device initialization on the hardware device based on the booting state of the hardware device.

13. The apparatus according to claim 11 or 12, wherein the status query module is further configured to:
obtain the booting state of the hardware device at an interval of each period; and
perform device initialization on the hardware device based on the booting state of the hardware device.

14. The apparatus according to claim 12 or 13, wherein the status query module is further configured to:
if the booting state of the hardware device is the second state, allocate a resource to the hardware device based on a device resource requirement of the hardware device.

15. The apparatus according to claim 14, wherein the status query module is further configured to:
store the booting state of the hardware device; and
before obtaining the booting state of the hardware device at an interval of each period, the status query module is further configured to:
if the currently stored booting state of the hardware device is not the third state, perform the step of obtaining the booting state of the hardware device at an interval of each period.

16. The apparatus according to claim 15, wherein after obtaining the booting state of the hardware device at an interval of each period, the status query module is further configured to:
update the currently stored booting state of the hardware device.

17. A computer device, wherein the computer device comprises a memory and a processor;
the memory is configured to store a computer program; and
the processor is configured to execute the computer program to implement a step of the device booting method according to any one of claims 1 to 8.

18. A computer-readable storage medium, comprising computer program instructions, wherein when the computer program instructions are run by a computer device, the computer device is enabled to perform a step of the device booting method according to any one of claims 1 to 8.

19. A computer program product comprising instructions, wherein when the instructions are run by a computer device, the computer device is enabled to perform a step of the device booting method according to any one of claims 1 to 8.
